# EUROPEAN PATENT APPLICATION

(11) **EP 4 804 616 A1**
(43) Date of publication of application: **09.09.2026**
(21) Application number: 24886430.8
(22) Date of filing: 31.10.2024
(51) Int. Cl.: H04W 36/00, H04W 36/08

(54) **APPARATUS AND METHOD FOR SUPPORTING UPLINK SYNCHRONIZATION DURING HANDOVER IN WIRELESS COMMUNICATION SYSTEM**

(30) Priority: 31.10.2023 US 202363546532 P
(71) Applicant: LG Electronics Inc., Yeongdeungpo-gu Seoul 07336 (KR)
(72) Inventor: HAN, Jaemin, Seoul 06772 (KR); BYUN, Daewook, Seoul 06772 (KR); KIM, Seokjung, Seoul 06772 (KR)
(74) Representative: Jung, Minkyu
(86) International application number: PCT/KR2024/096449
(87) International publication number: WO 2025/095761

(57) **Abstract**

The present disclosure relates to a method and an apparatus for efficiently supporting L1L2 triggered mobility (LTM) handover in a wireless communication system. A method of a control node of a base station for optimizing an uplink synchronization procedure may comprise the steps of: determining initiation of LTM configuration for a terminal; and transmitting a first message related to terminal-based timing advance (TA) measurement to a first distributed node among distributed nodes of the base station, wherein the first message includes information indicating at least one candidate cell to which the terminal-based TA measurement is to be applied.

## Description

### TECHNICAL FIELD

The following description relates to a wireless communication system, and more specifically, to an apparatus and method for supporting uplink synchronization during handover in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to an apparatus and method for efficiently supporting L1/L2 Triggered Mobility (LTM) handover in a wireless communication system.

The present disclosure relates to an apparatus and method for optimizing an early uplink synchronization procedure during LTM in a wireless communication system.

The present disclosure relates to an apparatus and method for optimizing an early uplink synchronization procedure for LTM within a Centralized Unit (CU) in a wireless communication system.

The present disclosure relates to an apparatus and method for optimizing an early uplink synchronization procedure for LTM between Distributed Units (DUs) within the same CU in a wireless communication system.

The present disclosure relates to an apparatus and method for providing a current serving DU of a UE with information related to UE-based Timing Advance (TA) measurement in a wireless communication system.

The present disclosure relates to an apparatus and method for skipping or omitting an early TA acquisition procedure for at least one candidate cell prepared for LTM in a wireless communication system.

The present disclosure relates to an apparatus and method for indicating, to a serving DU, at least one candidate cell to which UE-based TA measurement is to be applied in a wireless communication system.

The present disclosure relates to an apparatus and method for obtaining, from a previous serving DU, valid TA information for at least one candidate cell upon LTM cell switch in a wireless communication system.

The present disclosure relates to an apparatus and method for utilizing, at a new serving DU, TA information of at least one candidate cell obtained through an early TA acquisition procedure triggered by a previous serving DU in a wireless communication system.

The present disclosure relates to an apparatus and method in which, when an LTM cell switch between DUs within the same CU occurs, TA information of at least one valid candidate cell of a serving DU is delivered to a new serving DU in a wireless communication system.

The present disclosure relates to an apparatus and method for requesting valid TA information from a previous serving DU when an LTM cell switch between DUs within the same CU is detected in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

As an example of the present disclosure, a method may comprise determining, by a control node of a base station, to initiate a L1/L2 Triggered Mobility (LTM) configuration for a UE, and transmitting, by the control node of the base station, a first message related to UE-based Timing Advance (TA) measurement to a first distributed node among distributed nodes of the base station. The first message may comprise information indicating at least one candidate cell to which the UE-based TA measurement is to be applied.

As an example of the present disclosure, a method may comprise receiving, by a first distributed node of a base station, a first message related to UE-based Timing Advance (TA) measurement from a control node of the base station, and controlling, by the first distributed node of the base station, based on the first message, an early TA acquisition procedure for at least one candidate cell among a plurality of candidate cells for L1/L2 Triggered Mobility (LTM) to be skipped. The first message may comprise information indicating the at least one candidate cell to which the UE-based TA measurement is to be applied.

As an example of the present disclosure, an apparatus may comprise a transceiver, and a processor connected to the transceiver. The processor may control a control node of a base station to determine to initiate a L1/L2 Triggered Mobility (LTM) configuration for a UE, and control the control node of the base station to transmit a first message related to UE-based Timing Advance (TA) measurement to a first distributed node among distributed nodes of the base station. The first message may comprise information indicating at least one candidate cell to which the UE-based TA measurement is to be applied.

As an example of the present disclosure, an apparatus may comprise a transceiver, and a processor connected to the transceiver. The processor may control a first distributed node of a base station to receive a first message related to UE-based Timing Advance (TA) measurement from a control node of the base station, and control the first distributed node of the base station to control, based on the first message, an early TA acquisition procedure for at least one candidate cell among a plurality of candidate cells for L1/L2 Triggered Mobility (LTM) to be skipped. The first message may comprise information indicating the at least one candidate cell to which the UE-based TA measurement is to be applied.

As an example of the present disclosure, a communication apparatus may comprise at least one processor, and at least one memory connected to the at least one processor and storing instructions that, when executed by the at least one processor, cause a UE to perform operations. The operations may comprise determining, by a control node of a base station, to initiate a L1/L2 Triggered Mobility (LTM) configuration for a UE, and transmitting, by the control node of the base station, a first message related to UE-based Timing Advance (TA) measurement to a first distributed node among distributed nodes of the base station. The first message may comprise information indicating at least one candidate cell to which the UE-based TA measurement is to be applied.

As an example of the present disclosure, a non-transitory computer-readable medium storing at least one program instruction. The at least one program instruction, when executed by at least one processor, may cause a UE to perform operations. The operations may comprise determining, by a control node of a base station, to initiate a L1/L2 Triggered Mobility (LTM) configuration for a UE, and transmitting, by the control node of the base station, a first message related to UE-based Timing Advance (TA) measurement to a first distributed node among distributed nodes of the base station. The first message may comprise information indicating at least one candidate cell to which the UE-based TA measurement is to be applied.

The above-described aspects of the present disclosure are only some of the preferred embodiments of the present disclosure, and various embodiments reflecting the technical features of the present disclosure can be derived and understood by those skilled in the art based on the detailed description of the present disclosure to be described below.

### ADVANTAGEOUS EFFECTS

Embodiments based on the present disclosure may provide the following effects.

The present disclosure can optimize an early uplink synchronization procedure during L1/L2 Triggered Mobility (LTM) in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5a and FIG. 5b are examples of an inter-DU LTM procedure applicable to the present disclosure.
FIG. 6a and FIG. 6b are examples of a procedure for optimizing the early uplink synchronization procedure during intra-CU LTM according to an embodiment of the present disclosure.
FIG. 7 illustrates an example of a procedure for transmitting TA measurement-related information according to an embodiment of the present disclosure.
FIG. 8 illustrates an example of a procedure for receiving TA measurement-related information according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

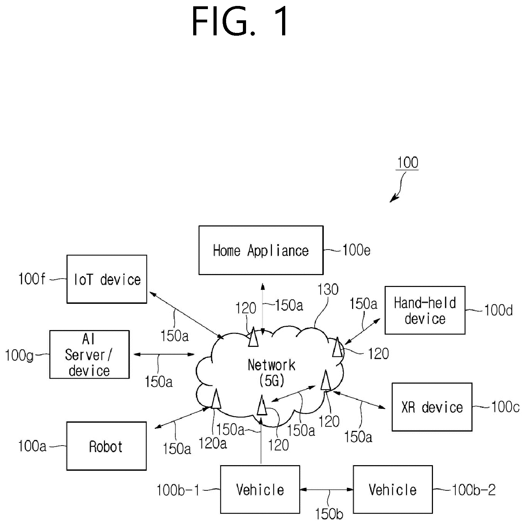

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

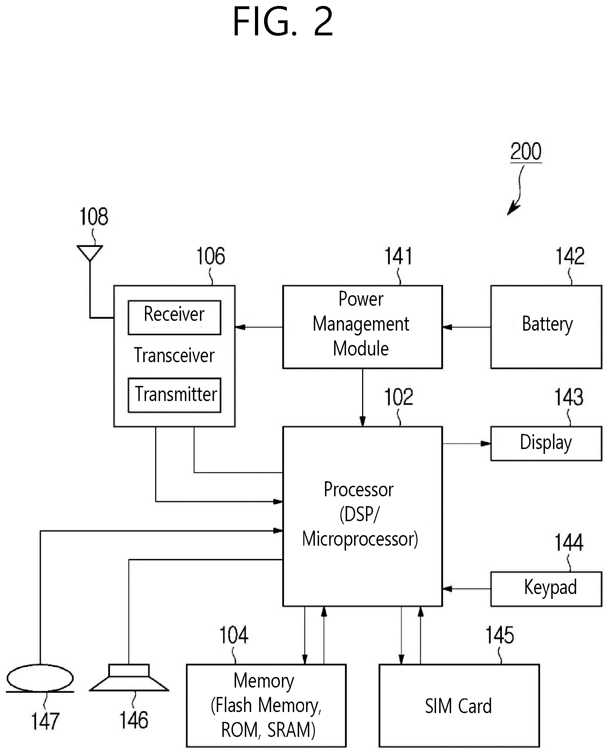

FIG. 2 illustrates an example of a UE applicable to the present disclosure.

Referring to FIG. 2, the UE 200 may include a processor 202, memory 204, transceiver 206, one or more antennas 208, power management module 241, battery 242, display 243, keypad 244, Subscriber Identification Module (SIM) card 245, speaker 246, and microphone 247.

The processor 202 may be configured to implement the descriptions, functions, procedures, proposals, methods and/or operational flowcharts disclosed herein. The processor 202 may be configured to control one or more other components of the UE 200 to implement the descriptions, functions, procedures, proposals, methods and/or operational flowcharts disclosed herein. Layers of wireless interface protocol may be implemented in the processor 202. The processor 202 may include ASIC, other chipset, logic circuit and/or data processing device. The processor 202 may be an application processor. The processor 202 may include at least one of DSP, Central Processing Unit (CPU), Graphics Processing Unit (GPU), and modem (modulator and demodulator).

The memory 204 is operably coupled with the processor 202 and may store various information for operating the processor 202. The memory 204 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 204 and executed by the processor 202. The memory 204 may be implemented within the processor 202 or external to the processor 202, in which case it may be communicatively coupled with the processor 202 through various methods known in the art.

The transceiver 206 is operably coupled with the processor 202 and may transmit and/or receive wireless signals. The transceiver 206 may include a transmitter and a receiver. The transceiver 206 may include baseband circuitry for processing radio frequency signals. The transceiver 206 may control one or more antennas 208 to transmit and/or receive wireless signals.

The power management module 241 may manage power for the processor 202 and/or transceiver 206. The battery 242 may supply power to the power management module 241.

The display 243 may output results processed by the processor 202. The keypad 244 may receive input for use by the processor 202. The keypad 244 may be displayed on the display 243.

The SIM card 245 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 246 may output sound-related results processed by the processor 202. The microphone 247 may receive sound-related input for use by the processor 202.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

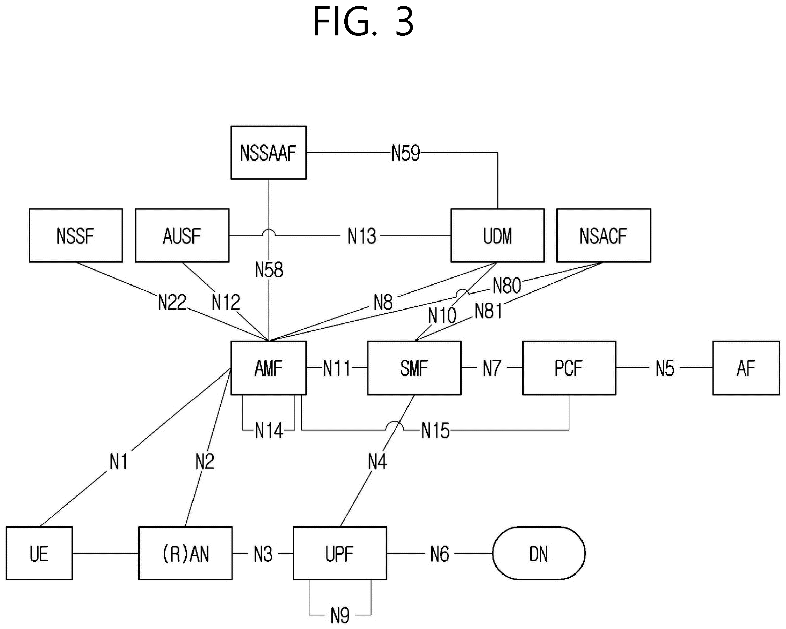

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

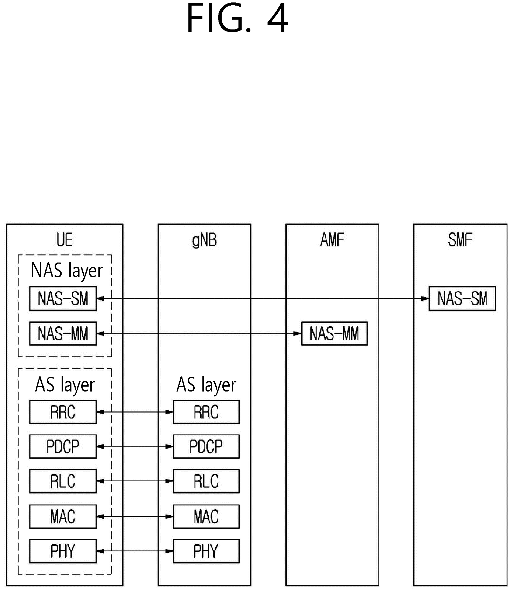

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

### Specific Embodiments of the Present Disclosure

The present disclosure relates to an apparatus and method for supporting LTM handover in a wireless communication system. More specifically, the present disclosure relates to an apparatus and method for optimizing an early uplink synchronization procedure during L1/L2 Triggered Mobility (LTM) within a Centralized Unit (CU) in a wireless communication system.

In the following description, a CU is a logical node hosting RRC and PDCP protocols of an en-gNB, or RRC, SDAP, and PDCP protocols of a gNB, that controls operation of at least one Distributed Unit (DU), and a DU is a logical node hosting RLC, MAC, and PHY layers of an en-gNB or gNB. A DU is partially controlled in operation by a CU connected via an F1 interface, and supports at least one cell.

LTM is a cell switch procedure for a PCell (or PSCell) triggered by a network via a MAC CE based on L1 measurement. A PCell is a primary cell of a master cell group, and a PSCell is a primary cell of a secondary cell group.

A Timing Advance (TA) is an offset between the start of a downlink subframe received at a UE and the start of an uplink subframe transmitted, and a Time Alignment Timer (TAT) is a timer that controls a period during which a MAC entity considers serving cells belonging to an associated Timing Alignment Group (TAG) to be aligned in uplink time. A Time Alignment Error (TAE) refers to the largest timing difference between two different NR signals.

According to the network mobility enhancement study work item (WI) of Rel-18, the following has been documented to support LTM for reducing latency, overhead, and interruption time during serving cell change.

### 3. Justification

When the UE moves from the coverage area of one cell to another cell, a serving cell change needs to be performed. Currently serving cell change is triggered by L3 measurements and is done by RRC signalling triggered Reconfiguration with Synchronisation for change of PCell and PSCell, as well as release add for SCells when applicable. All cases involve complete L2 (and L1) resets, leading to longer latency, larger overhead and longer interruption time than beam switch mobility. The goal of L1/L2 mobility enhancements is to enable a serving cell change via L1/L2 signalling, in order to reduce the latency, overhead and interruption time.

In Rel-17 Conditional PSCell change (CPC)/Conditional PSCell addition (CPA), a CPC/CPA-configured UE has to release the CPC/CPA configurations when completing random access towards the target PSCell. Hence the UE doesn't have a chance to perform subsequent CPC/CPA without prior CPC/CPA reconfiguration and re-initialization from the network. This will increase the delay for the cell change and increase the signaling overhead, especially in the case of frequent SCG changes when operating FR2. Therefore, MR-DC with selective activation of cell groups aims at enabling subsequent CPC/CPA after SCG change, without reconfiguration and re-initialization on the CPC/CPA preparation from the network. This results in a reduction of the signalling overhead and interrupting time for SCG change.

Currently, CHO and MR-DC cannot be configured simultaneously. This limits the usefulness of these two features when MR-DC is configured. If it is not completed in Rel-17, Rel-18 should specify mechanisms for CHO and MR-DC to be configured simultaneously. However, this alone may not be sufficient to optimise MR-DC mobility, as the radio link quality of the conditionally-configured PSCell may not be good enough or may not be the best candidate PSCell when the UE accesses the target PCell, and this may impact the UE throughput. To mitigate this throughput impact, Rel-18 CHO+MRDC can consider CHO including target MCG and multiple candidate SCGs for CPC/CPA.

### 4. Objective

### 4.1 Objective of SI or Core part WI or Testing part WI

The detailed objective of this work item are:
1. To specify mechanism and procedures of L1/L2 based inter-cell mobility for mobility latency reduction:
   - Configuration and maintenance for multiple candidate cells to allow fast application of configurations for candidate cells [RAN2, RAN3]
      ∘ Dynamic switch mechanism among candidate serving cells (including SpCell and SCell) for the potential applicable scenarios based on L1/L2 signalling [RAN2, RAN1]
      ∘ L1 enhancements for inter-cell beam management, including L1 measurement and reporting, and beam indication [RAN1, RAN2]
   - Note 1: Early RAN2 involvement is necessary, including the possibility of further clarifying the interaction between this bullet with the previous bullet
   - Note 2: Only SSB-based L1 measurement is supported in this release.
      ∘ Timing Advance management [RAN1, RAN2]
      ∘ CU-DU interface signaling to support L1/L2 mobility, if needed [RAN3]

Note 3: FR2 specific enhancements are not precluded, if any.

Note 4: The procedure of L1/L2 based inter-cell mobility are applicable to the following scenarios:
- Standalone, CA and NR-DC case with serving cell change within one CG, prioritizing MCG
- Intra-DU case and intra-CU inter-DU case (applicable for Standalone and CA: no new RAN interfaces are expected)
- Both intra-frequency and inter-frequency
- Both FR1 and FR2
- Source and target cells may be synchronized or non-synchronized

To achieve fast serving cell change, early DL/UL synchronization before cell switch, and handover based on L1 measurement reports triggered by MAC CE have been agreed to be specified for LTM, and the corresponding work is ongoing in Rel-18 for intra-CU LTM. Intra-CU LTM may include inter-DU LTM or intra-DU LTM.

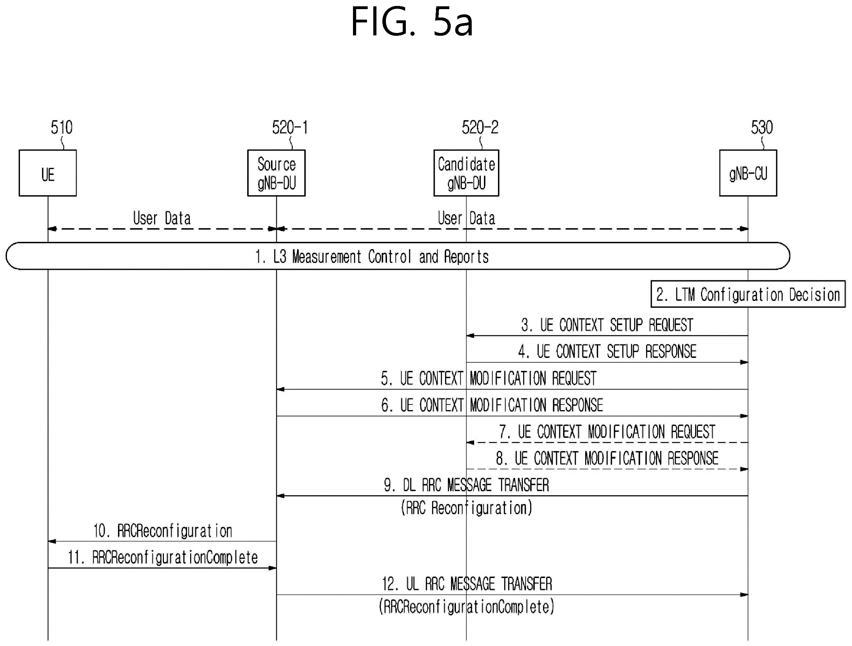

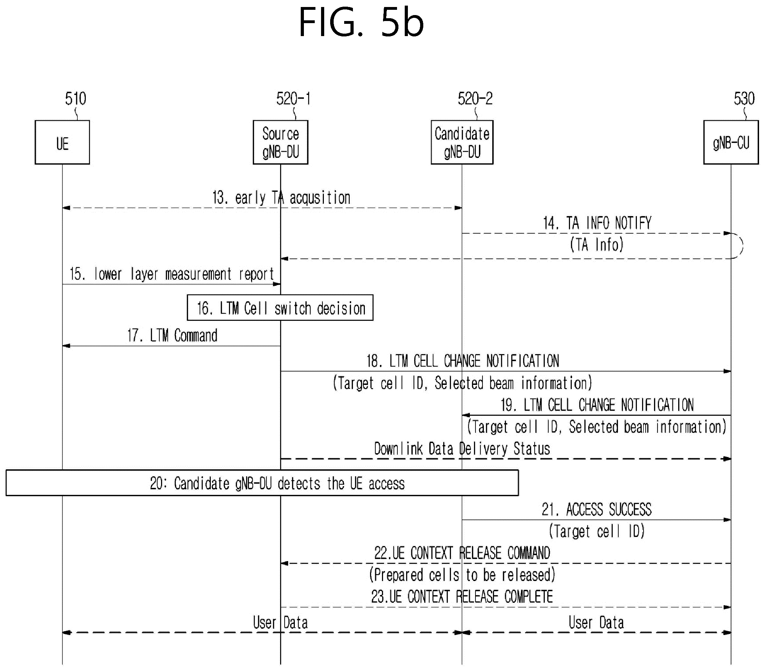

FIG. 5a and FIG. 5b are examples of an inter-DU LTM procedure applicable to the present disclosure. The procedure of FIG. 5a and FIG. 5b may be used when a UE moves from one DU within a CU of a gNB to another DU within the CU of the same gNB during NR operation for LTM.

Referring to FIG. 5a and FIG. 5b, in step 1, L3 measurement control and reporting are performed. UE 510 transmits an L3 measurement report message including measurement results for neighboring cells to source gNB-DU 520-1. Source gNB-DU 520-1 transmits the received L3 measurement report message to gNB-CU 530. Source gNB-DU 520-1 may transmit a UL RRC MESSAGE TRANSFER message including the L3 measurement report message to source gNB-DU 520-1.

In step 2, gNB-CU 530 determines an LTM configuration. gNB-CU 530 determines to initiate an LTM configuration for UE 510 based on the L3 measurement report message.

In step 3, gNB-CU 530 transmits a UE CONTEXT SETUP REQUEST message to candidate gNB-DU 520-2. The UE CONTEXT SETUP REQUEST message may include a cell ID of one candidate target cell. gNB-CU 530 uses the UE CONTEXT SETUP REQUEST message to indicate the ID of source gNB-DU 520-1 to candidate gNB-DU 520-2 and to request PRACH resources. gNB-CU 530 may request candidate gNB-DU 520-2 to provide information related to lower layer configuration in order to generate reference configuration information to be used for LTM.

In step 4, candidate gNB-DU 520-2 transmits a UE CONTEXT SETUP RESPONSE message to gNB-CU 530. When accepting an LTM configuration request for a candidate target cell, candidate gNB-DU 520-2 may respond to gNB-CU 530 using a UE CONTEXT SETUP RESPONSE message including information related to the generated lower layer RRC configuration and information related to a Reference Signal (RS) configuration for the accepted candidate target cell. For example, the information related to the RRC configuration may include at least one of information related to a Transmission Configuration Indication (TCI) state configuration or information related to a Random Access Channel (RACH) configuration.

When there is at least one candidate target cell in candidate gNB-DU 520-2, the UE context setup of steps 3 to 4 may be performed individually for each candidate target cell.

In step 5, gNB-CU 530 transmits a UE CONTEXT MODIFICATION REQUEST message to source gNB-DU 520-1. gNB-CU 530 may transmit, to source gNB-DU 520-1a, UE CONTEXT MODIFICATION REQUEST message including at least one of information related to RS configuration, information related to TCI state configuration, or information related to RACH configuration collected for at least one accepted candidate target cell of other gNB-DUs (e.g., candidate gNB-DU 520-2).

In step 6, source gNB-DU 520-1 transmits a UE CONTEXT MODIFICATION RESPONSE message to gNB-CU 530. The UE CONTEXT MODIFICATION RESPONSE message may include at least one of information related to RS configuration of the source cell, candidate cells prepared for LTM, or information related to the generated CSI reporting configuration.

In step 7, gNB-CU 530 transmits a UE CONTEXT MODIFICATION REQUEST message to candidate gNB-DU 520-2. The UE CONTEXT MODIFICATION REQUEST message may include at least one of a cell ID of at least one prepared candidate cell or information related to an associated RS configuration for each candidate cell in at least one other candidate gNB-DU. gNB-CU 530 may provide candidate gNB-DU 520-2 with lower layer configuration information among the reference configuration information. Here, the candidate cell may be the same cell as the source cell.

In step 8, candidate gNB-DU 520-2 responds to gNB-CU 530 using a UE CONTEXT MODIFICATION RESPONSE message. The UE CONTEXT MODIFICATION RESPONSE message includes updated lower layer configuration information including information related to the generated CSI reporting configuration.

In step 9, gNB-CU 530 transmits a DL RRC MESSAGE TRANSFER message to source gNB-DU 520-1. The DL RRC MESSAGE TRANSFER message may include a generated RRCReconfiguration message including the LTM configuration.

In step 10, source gNB-DU 520-1 forwards the received RRCReconfiguration message to UE 510, and in step 11, UE 510 transmits an RRCReconfigurationComplete message to source gNB-DU 520-1. In step 12, source gNB-DU 520-1 transmits a UL RRC MESSAGE TRANSFER message including the RRCReconfigurationComplete message to gNB-CU 530.

In step 13, early synchronization is performed. The early synchronization procedure may include an early TA acquisition procedure. The early TA acquisition procedure may be performed as defined in TS 38.300.

In step 14, candidate gNB-DU 520-2 transmits a notification message for TA information to source gNB-DU 520-1 via gNB-CU 530. The notification message for TA information may include at least one of a TA value, associated CFRA resource information, a candidate cell ID, or a source gNB-DU ID.

In step 15, UE 510 transmits a report message for lower layer measurement results to source gNB-DU 520-1. In step 16, source gNB-DU 520-1 determines an LTM cell switch. That is, source gNB-DU 520-1 determines to execute LTM for cell switch to a candidate target cell.

In step 17, source gNB-DU 520-1 transmits an LTM command to UE 510.

In step 18, source gNB-DU 520-1 transmits a notification message for LTM cell change to gNB-CU 530. The notification message for LTM cell change may include a message for indicating that an LTM command to UE 510 has been initiated. For example, the notification message for LTM cell change may include at least one of a target cell ID or a TCI state ID. The TCI state ID may indicate selected beam information.

In step 19, gNB-CU 530 transmits a notification message for LTM cell change including the target cell ID and the TCI state ID to candidate gNB-DU 520-2.

In step 20, candidate gNB-DU 520-2 detects access of UE 510 as a target gNB-DU, and in step 21, transmits an access success message to gNB-CU 530. The access success message may include a cell ID of the target cell.

In step 22, gNB-CU 530 transmits a UE CONTEXT RELEASE COMMAND to source gNB-DU 520-1. The UE CONTEXT RELEASE COMMAND may request release of resources of a prepared cell.

In step 23, source gNB-DU 520-1 transmits a UE CONTEXT RELEASE COMPLETE message to gNB-CU 530. Source gNB-DU 520-1 may release resources of the prepared cell and respond to gNB-CU 530 using the UE CONTEXT RELEASE COMPLETE message.

As described with reference to FIG. 5, uplink TA values for some candidate cells are obtained through the early TA acquisition procedure. However, according to the current discussion, uplink TA values for some candidate cells obtained as described above may only be used by the current serving DU that triggered the procedure, and cannot be re-used by another serving DU in subsequent LTM operations. For example, as in step 17 of FIG. 5, when the source DU triggers a cell switch to one of the candidate cells in a candidate DU, as in step 20 of FIG. 5, the cell that the UE successfully accessed becomes a new serving cell. At this point, the UE undergoes another handover to other candidate cells including the previous serving cell for subsequent LTM operations.

For fast serving cell change, early uplink synchronization from the current serving cell to candidate cells may be performed again. However, TA acquisition procedures for some of the candidate cells may have already been executed, and uplink TA values for some of the candidate cells may have already been provided to the previous serving DU (e.g., the source DU in FIG. 5). Of course, such previously obtained TA values may no longer be valid due to the UE's mobility. However, depending on (1) network deployments, (2) how fast the UE is subject to serving cell change, and (3) the TAT of the candidate cells configured to the UE, previously calculated uplink TA values for some candidate cells may still be valid. Here, the TAT value of the candidate cells may be up to 10.240 seconds, and may also be set to infinity according to TS 38.331. If previously calculated uplink TA values for some candidate cells are still valid, early TA acquisition procedures to obtain those TA values need not be re-triggered from the new serving DU.

In addition, a UE may be configured by the network to perform UE based TA measurement from the current serving cell toward a candidate cell. In this case, the UE measures or derives a TA for the candidate cell based on the Rx timing difference between the current serving cell and the candidate cell, and the current TA value (e.g., the TA value for the current serving cell). As such, when the UE is configured to perform UE based TA measurement from the current serving cell toward a candidate cell, it has been agreed that when the UE's serving cell is switched from the current serving cell to that candidate cell, the UE applies the TA value pre-measured for that candidate cell and performs RACH-less LTM. In this case, an early TA acquisition procedure for those candidate cells need not be triggered from the serving DU for RACH-less LTM. However, during the current LTM preparation phase, the serving DU does not know whether the UE has been configured to perform UE based TA measurement. Of course, during the LTM preparation phase, a DU may be requested by a CU to prepare lower layer configuration for UE based TA measurement on a per candidate cell basis (e.g., reference signal configuration to measure the received signal time difference between the current serving cell and the candidate cell). However, a request for lower layer configuration from the CU does not mean that the UE should always be configured as such. That is, whether to configure UE based TA measurement and for which candidate cells to configure UE based TA measurement is entirely up to the CU to decide.

When a serving cell changes during LTM, the CU may decide to reconfigure UE based TA measurement on a per candidate cell basis depending on which cell the UE is currently being served in. For example, as shown in FIG. 5a and FIG. 5b, when the serving cell is changed from the source DU (e.g., source gNB-DU 520-1) to one of the candidate cells of a candidate DU (e.g., candidate gNB-DU 520-2), the CU may decide to reconfigure UE based TA measurement to the UE for subsequent LTM toward at least some of the other candidate cells of the candidate DU. For example, when some candidate cells in the candidate DU are collocated with the current new serving cell in the candidate DU and all operate within FR1 frequency such that the UE's downlink TAE between the serving cell and candidate cells can be maintained within 260ns (according to RAN4's agreement), the CU may decide to reconfigure UE based TA measurement to the UE for those candidate cells. In this case, early TA acquisition for those candidate cells in the candidate DU is unnecessary. However, currently there is no mechanism by which the CU can notify this to a DU.

Therefore, the present disclosure proposes mechanisms for optimizing the early uplink synchronization procedure during intra-CU LTM.

The present disclosure describes a method and apparatus for optimizing the early uplink synchronization procedure during intra-CU LTM by sharing pre-obtained TA values of some candidate cells when a serving cell changes across DUs, and by notifying the current serving DU whether the UE has been configured and/or reconfigured to perform UE based TA measurement for some candidate cells.

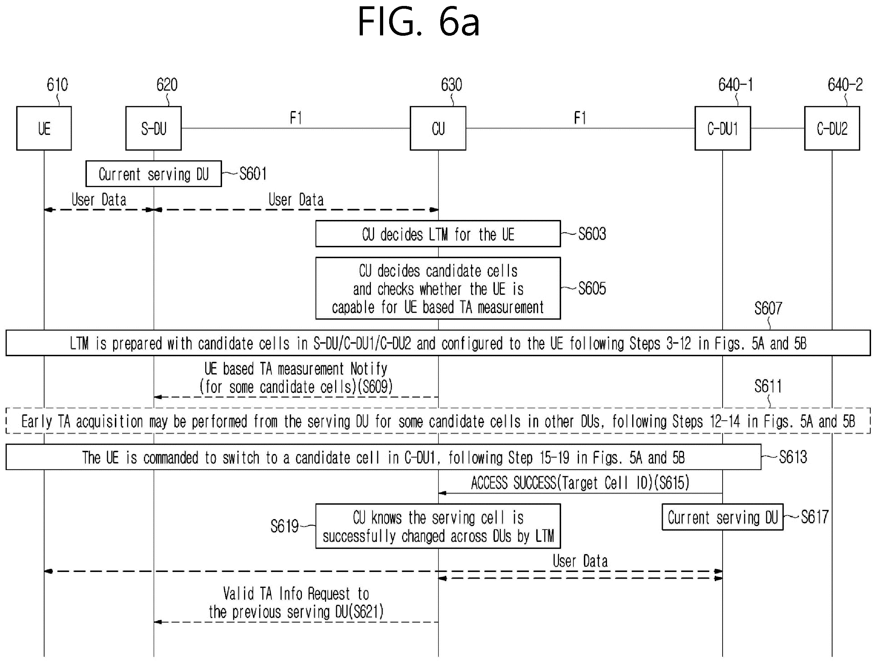

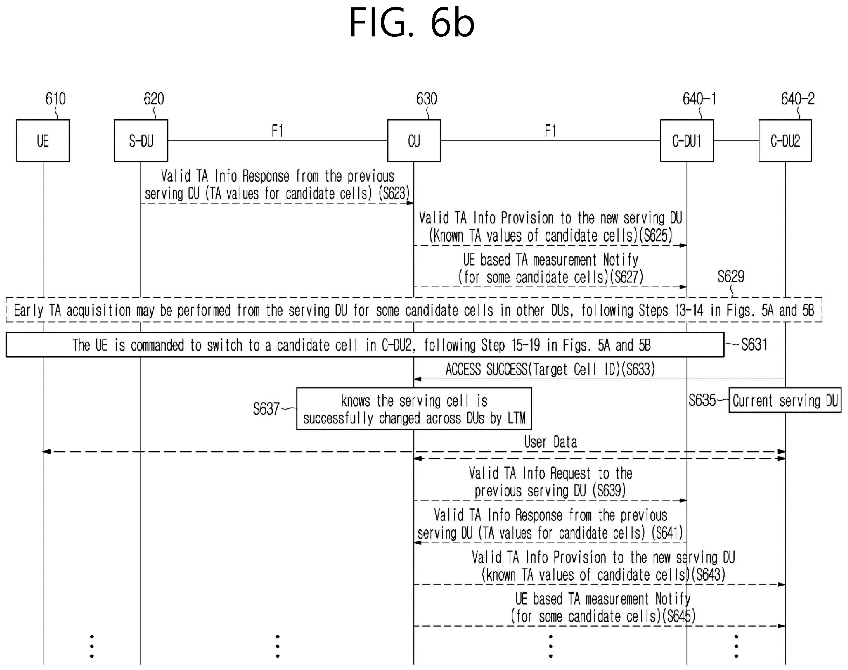

FIG. 6a and FIG. 6b are examples of a procedure for optimizing the early uplink synchronization procedure during intra-CU LTM according to an embodiment of the present disclosure.

Referring to FIG. 6a and FIG. 6b, in step S601, source DU (S-DU) 620 operates as the current serving DU of UE 610. S-DU 620 is connected to CU 630 via an F1 interface and manages the current serving cell of UE 610. At this time, candidate DUs (C-DUs) 640-1 and 640-2 are connected to CU 630 via an F1 interface and manage at least one candidate cell that is not the current serving cell of UE 610.

In step S603, CU 630 determines LTM for UE 610. For example, CU 630 may receive an L3 measurement report message from UE 610 and decide to initiate an LTM configuration based on the L3 measurement report message. The L3 measurement report message may include measurement results of the UE for neighboring cells. Specifically, UE 610 may transmit an L3 measurement report message to S-DU 620, and S-DU 620 may transmit a UL RRC MESSAGE TRANSFER message including the received L3 measurement message to CU 630. CU 630 may determine to initiate an LTM configuration for UE 610 based on the L3 measurement report message.

In step S605, CU 630 determines candidate cells to be prepared for LTM and checks whether UE 610 is capable of performing UE based TA measurement.

In step S607, LTM is prepared using candidate cells in S-DU 620, C-DU1 640-1, and/or C-DU2 640-2, and the prepared LTM is configured to the UE. During the LTM preparation phase, S-DU 620, C-DU1 640-1, and/or C-DU2 640-2 may be requested to prepare lower layer configuration information for UE based TA measurement on a per candidate cell basis. For example, the lower layer configuration information may include reference signal configuration information for measuring the received signal time difference between the serving cell and the candidate cell.

According to an embodiment, step S607 may include the following operations (e.g., operations of steps 3 to 12 of FIG. 5a and FIG. 5b). Specifically, CU 630 may transmit a UE CONTEXT SETUP REQUEST message to C-DU1 640-1 and/or C-DU2 640-2, and receive a UE CONTEXT SETUP RESPONSE message from C-DU1 640-1 and/or C-DU2 640-2. The UE CONTEXT SETUP REQUEST message may include a cell ID of a candidate target cell, and may include information indicating the ID of S-DU 620 and requesting PRACH resources. The candidate target cell may be determined based on the L3 measurement report message. The UE CONTEXT SETUP REQUEST message may request C-DU1 640-1 and/or C-DU2 640-2 to provide information related to lower layer configuration in order to generate reference configuration information to be used for LTM. The UE CONTEXT SETUP RESPONSE message may include information related to lower layer RRC configuration for LTM configuration and information related to RS configuration for a candidate target cell accepted for LTM. For example, the information related to the RRC configuration may include at least one of information related to TCI state configuration or information related to RACH configuration.

Subsequently, CU 630 may transmit a UE CONTEXT MODIFICATION REQUEST message to S-DU 620 and receive a UE CONTEXT MODIFICATION RESPONSE message from S-DU 620. The UE CONTEXT MODIFICATION REQUEST message may include at least one of information related to RS configuration, information related to TCI state configuration, or information related to RACH configuration collected for at least one accepted candidate target cell of other candidate DUs (e.g., C-DU1 640-1, C-DU2 640-2). The UE CONTEXT MODIFICATION RESPONSE message may include at least one of information related to RS configuration of the source cell, prepared candidate cells, or information related to the generated CSI reporting configuration.

Additionally, CU 630 may transmit a UE CONTEXT MODIFICATION REQUEST message to C-DU1 640-1 and/or C-DU2 640-2 and receive a UE CONTEXT MODIFICATION RESPONSE message from C-DU1 640-1 and/or C-DU2 640-2. The CU may use the UE CONTEXT MODIFICATION REQUEST message to provide C-DU1 640-1 and/or C-DU2 640-2 with lower layer configuration information (e.g., information related to RS configuration, TCI state, or information related to RACH configuration) among the reference configuration information for LTM. For example, the UE CONTEXT MODIFICATION REQUEST message may include at least one of a cell ID of at least one prepared candidate cell or information related to an associated RS configuration for each candidate cell in at least one other candidate DU. Here, the candidate cell may be the same cell as the source cell. The UE CONTEXT MODIFICATION RESPONSE message may include updated lower layer configuration information including information related to the generated CSI reporting configuration.

CU 630 may transmit a DL RRC MESSAGE TRANSFER message including an RRCReconfiguration message containing reference configuration information for LTM to S-DU 620, and S-DU 620 may transmit the received RRCReconfiguration message to UE 610. UE 620 may transmit an RRCReconfigurationComplete message to S-DU 620, and S-DU 620 may transmit a UL RRC MESSAGE TRANSFER message including the RRCReconfigurationComplete message to CU 630.

In step S609, CU 630 transmits a notification message for UE based TA measurement to S-DU 620. The notification message for UE based TA measurement may be transmitted for some candidate cells. According to an embodiment, when the UE is capable of performing UE based TA measurement and UE based TA measurement has been configured by RRC for some candidate cells in step S607, CU 630 may transmit a notification message for UE based TA measurement for those candidate cells to S-DU 620, which is the current serving DU. Accordingly, the early TA acquisition procedure for those candidate cells may be skipped. Alternatively, when UE based TA measurement configuration is configured to the UE by an LTM cell switch command, CU 630 may notify S-DU 620 of the candidate cells for which UE based TA measurement is applicable, so that S-DU 620, which is the current serving DU, may skip the early TA acquisition procedure for those candidate cells. In addition, this may allow configuring the UE so that UE based TA measurement is executed via the LTM cell switch command when those candidate cells are triggered for mobility.

In step S611, an early TA acquisition procedure is performed. Early TA acquisition may be performed by S-DU 620 for RACH-less LTM. The early TA acquisition procedure may be performed by S-DU 620 for at least one other candidate cell in other DUs (e.g., C-DU1 640-1 and/or C-DU2 640-2). At this time, the early TA acquisition procedure for some candidate cells indicated by the notification message for UE based TA measurement may be skipped or omitted. For example, the early TA acquisition procedure may be performed for at least one other candidate cell excluding those candidate cells indicated by the notification message for UE based TA measurement. According to an embodiment, TA information for those candidate cells indicated by the notification message for UE based TA measurement may be obtained based on the UE based TA measurement operation.

According to an embodiment, step S611 may include the following operations (e.g., operations of steps 13 to 14 of FIG. 5a and FIG. 5b). Specifically, S-DU 620 may perform the early TA acquisition procedure for at least one other candidate cell and obtain TA information for the at least one other candidate cell obtained through the early TA acquisition procedure. For example, C-DU1 640-1 and/or C-DU2 640-2 corresponding to the at least one other candidate cell may obtain TA information for the candidate cell through the early TA acquisition procedure and transmit a notification message including the obtained TA information of the at least one candidate cell to S-DU 620. The notification message including TA information may further include at least one of associated CFRA resource information, a cell ID of the candidate cell, or an ID of the S-DU.

In step S613, UE 610 receives a message commanding a cell switch to a candidate target cell of C-DU1 640-1. At this time, UE 610 may access the candidate target cell of C-DU1 640-1 based on the command message.

According to an embodiment, step S613 may include the following operations (e.g., operations of steps 15 to 19 of FIG. 5a and FIG. 5b). For example, UE 610 may transmit a report message for lower layer measurement results to S-DU 620. S-DU 620 may determine an LTM cell switch based on the report message for lower layer measurement results and transmit an LTM command instructing UE 610 to switch to the candidate target cell. In addition, S-DU 620 may transmit a notification message for LTM cell change indicating that the LTM command has been transmitted to UE 610 to CU 630, and CU 630 may transmit the notification message for LTM cell change to the DU to which the candidate target cell belongs (e.g., C-DU1 640-1). The notification message for LTM cell change may include at least one of a cell ID of the candidate target cell or a TCI state ID, as a message for indicating that an LTM command to UE 610 has been initiated. The TCI state ID may indicate selected beam information. The notification message for LTM cell change may further include valid TA information for at least one candidate cell held by S-DU 620, which is the current serving DU. Here, the valid TA information may have been obtained through the early TA acquisition procedure triggered by S-DU 620, and may include at least one valid TA value corresponding to the at least one candidate cell.

In step S615, C-DU1 640-1 transmits an access success message to CU 630. C-DU1 640-1 may detect access of UE 610 and transmit an access success message including the ID of the target cell that UE 610 successfully accessed to CU 630. In step S617, C-DU1 640-1 may begin operating as the serving DU of UE 610.

In step S619, CU 630 confirms that the serving cell has been successfully changed across DUs by LTM. CU 630 may confirm the changed serving cell of UE 610 based on the ID of the target cell included in the access success message.

In step S621, CU 630 transmits a message requesting valid TA information to S-DU 620, which is the previous serving DU. In step S623, S-DU 620, which is the previous serving DU, transmits a response message including the valid TA information. For example, the response message may include at least one valid TA value for at least one candidate cell. In step S625, CU 630 transmits the valid TA information obtained from S-DU 620, which is the previous serving DU, to C-DU1 640-1, which is the new serving DU. That is, CU 630 may retrieve valid TA information for at least one candidate cell from S-DU 620, which is the previous serving DU, and provide the retrieved valid TA information for the at least one candidate cell to C-DU1 640-1, which is the new serving DU. Here, the valid TA information may have been obtained through the early TA acquisition procedure triggered by S-DU 620, which is the previous serving DU, and may include at least one valid TA value corresponding to the at least one candidate cell.

In step S627, CU 630 transmits a notification message for UE based TA measurement to C-DU1 640-1. The notification message for UE based TA measurement may be transmitted for some candidate cells. Here, those candidate cells may be the same as or different from the candidate cells in step S609. According to an embodiment, when the UE is capable of performing UE based TA measurement and UE based TA measurement has been configured by RRC for some candidate cells, CU 630 may transmit a notification message for UE based TA measurement for those candidate cells to C-DU1 640-1, which is the current serving DU. Through this, the early TA acquisition procedure for those candidate cells may be skipped. Alternatively, when UE based TA measurement configuration is configured to the UE by an LTM cell switch command, CU 630 may notify C-DU1 640-1 of the candidate cells for which UE based TA measurement is applicable, so that C-DU1 640-1, which is the current serving DU, may skip the early TA acquisition procedure for those candidate cells. In addition, this may allow configuring the UE so that UE based TA measurement is executed via the LTM cell switch command when those candidate cells are triggered for mobility.

In step S629, an early TA acquisition procedure is performed. Early TA acquisition may be performed by C-DU1 640-1, which is the new serving DU, for RACH-less LTM. The early TA acquisition procedure may be performed by C-DU1 640-1 for at least one other candidate cell in other DUs (e.g., S-DU1 620, which is the previous serving DU, and/or C-DU2 640-2). At this time, the early TA acquisition procedure for some candidate cells indicated by the notification message for UE based TA measurement may be skipped or omitted. For example, the early TA acquisition procedure may be performed for at least one other candidate cell excluding those candidate cells indicated by the notification message for UE based TA measurement. According to an embodiment, TA information for those candidate cells indicated by the notification message for UE based TA measurement may be obtained based on the UE based TA measurement operation.

According to an embodiment, step S629 may include the following operations (e.g., operations of steps 13 to 14 of FIG. 5a and FIG. 5b). Specifically, C-DU1 640-1 may perform the early TA acquisition procedure for at least one other candidate cell and obtain TA information for the at least one other candidate cell obtained through the early TA acquisition procedure. For example, S-DU1 620 and/or C-DU2 640-2 corresponding to the at least one other candidate cell may obtain TA information for the candidate cell through the early TA acquisition procedure and transmit a notification message including the obtained TA information of the at least one candidate cell to C-DU1 640-1, which is the current serving DU. The notification message including TA information may further include at least one of associated CFRA resource information, a cell ID of the candidate cell, or an ID of C-DU1 640-1, which is the current serving DU.

In step S631, UE 610 receives a message commanding a cell switch to a candidate cell of C-DU2 640-2. At this time, UE 610 may access the candidate target cell of C-DU2 640-2 based on the command message.

According to an embodiment, step S631 may include the following operations (e.g., operations of steps 15 to 19 of FIG. 5a and FIG. 5b). For example, UE 610 may transmit a report message for lower layer measurement results to C-DU1 640-1, which is the current serving DU. C-DU1 640-1, which is the current serving DU, may determine an LTM cell switch for UE 610 based on the report message for lower layer measurement results and transmit an LTM command instructing UE 610 to switch to the candidate target cell. In addition, C-DU1 640-1 may transmit a notification message for LTM cell change indicating that the LTM command has been transmitted to UE 610 to CU 630, and CU 630 may transmit the notification message for LTM cell change to the DU to which the candidate target cell belongs (e.g., C-DU2 640-2). The notification message for LTM cell change may include a message for indicating that an LTM command to UE 610 has been initiated. The notification message for LTM cell change may include at least one of a cell ID of the candidate target cell or a TCI state ID. The TCI state ID may indicate selected beam information. The notification message for LTM cell change may further include valid TA information for at least one candidate cell held by C-DU1 640-1, which is the current serving DU. Here, the valid TA information may include at least one valid TA value corresponding to the at least one candidate cell, which may be the valid TA information for the at least one candidate cell received by C-DU1 640-1 from CU 630 in step S625, or obtained through the early TA acquisition procedure triggered by C-DU1 640-1.

In step S633, C-DU2 640-2 transmits an access success message to CU 630. C-DU2 640-2 may detect access of UE 610 and transmit an access success message including the ID of the target cell that UE 610 successfully accessed to CU 630. In step S635, C-DU2 640-2 may begin operating as the serving DU of UE 610.

In step S637, CU 630 confirms that the serving cell has been successfully changed across DUs by LTM. CU 630 may confirm the changed serving cell of UE 610 based on the ID of the target cell included in the access success message.

In step S639, CU 630 transmits a message requesting valid TA information to C-DU1 640-1, which is the previous serving DU. In step S641, C-DU1 640-1, which is the previous serving DU, transmits a response message including the valid TA information. For example, the response message may include at least one valid TA value corresponding to at least one candidate cell. In step S643, CU 630 transmits the valid TA information obtained from C-DU1 640-1, which is the previous serving DU, to C-DU2 640-2, which is the new serving DU. That is, CU 630 may retrieve valid TA information from C-DU1 640-1, which is the previous serving DU, and provide the retrieved valid TA information to C-DU2 640-2, which is the new serving DU. Here, the valid TA information may include at least one valid TA value corresponding to the at least one candidate cell, which may be the valid TA information for the at least one candidate cell received by C-DU1 640-1, which is the previous serving DU, from CU 630 in step S625, or obtained through the early TA acquisition procedure triggered by C-DU1 640-1, which is the previous serving DU.

In step S645, CU 630 transmits a notification message for UE based TA measurement to C-DU2 640-2. The notification message for UE based TA measurement may be transmitted for some candidate cells. Here, those candidate cells may be the same as or different from the candidate cells in step S609 or step S627. According to an embodiment, when the UE is capable of performing UE based TA measurement and UE based TA measurement has been configured by RRC for some candidate cells, CU 630 may transmit a notification message for UE based TA measurement for those candidate cells to C-DU2 640-2, which is the current serving DU. Through this, the early TA acquisition procedure for those candidate cells may be skipped. Alternatively, when UE based TA measurement configuration is configured to the UE by an LTM cell switch command, CU 630 may notify C-DU2 640-2 of the candidate cells for which UE based TA measurement is applicable, so that C-DU2 640-2, which is the current serving DU, may skip the early TA acquisition procedure for those candidate cells. In addition, this may allow configuring the UE so that UE based TA measurement is executed via the LTM cell switch command when those candidate cells are triggered for mobility.

As described above, the present disclosure relates to a method and apparatus for supporting LTM and configuring a UE in a wireless communication system.

According to an embodiment, a CU of a base station may confirm that a UE is capable of performing UE based TA measurement for at least one candidate cell. The CU may notify a DU that UE based TA measurement has been configured to the UE, or that UE based TA measurement will be applicable for at least one candidate cell. Here, the DU may be the current serving DU of the UE, as a DU involved in the process of preparing at least one candidate cell for LTM and configuring LTM to the UE.

According to an embodiment, a CU of a base station may detect a successful cell switch across DUs. Here, the DUs may include DUs involved in the process of preparing a candidate cell for LTM and configuring LTM to the UE. The CU retrieves valid TA information of at least one candidate cell from the previous serving DU, and provides the retrieved TA information to the new serving DU. Here, the valid TA information of the at least one candidate cell may be TA information obtained through the early TA acquisition procedure triggered by the previous serving DU.

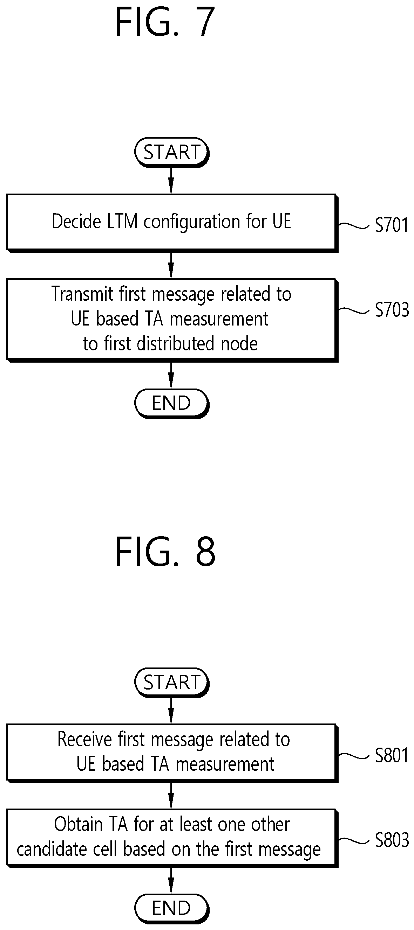

FIG. 7 illustrates an example of a procedure for transmitting TA measurement-related information according to an embodiment of the present disclosure. FIG. 7 illustrates a method performed by a control node of a base station. The base station includes an NG-RAN node, and the control node may include a CU of the NG-RAN node. The control node may be connected to a plurality of distributed nodes (e.g., DUs) via an F1 interface.

Referring to FIG. 7, in step S701, the control node initiates an LTM configuration for a UE. The control node may determine to initiate an LTM configuration within a CU of the base station based on an L3 measurement report message received from the UE. Intra-CU LTM may include at least one of inter-DU LTM within the same CU or intra-CU LTM. The L3 measurement report message may include measurement results for neighboring cells. According to an embodiment, the control node may determine candidate cells to be prepared for LTM and confirm that the UE is capable of performing UE based TA measurement.

In step S703, the control node transmits a first message related to UE based TA measurement to a first distributed node. Here, the first distributed node may be the current serving DU of the UE. The first message may indicate at least one candidate cell to which UE based TA measurement is to be applied. For example, the first message may include a notification message indicating that UE based TA measurement for at least one candidate cell may be performed. According to an embodiment, when the UE has been configured by RRC to perform UE based TA measurement for at least one candidate cell, the control node may transmit a notification message related to UE based TA measurement for the at least one candidate cell to the first distributed node, which is the current serving DU. According to an embodiment, when the UE is configured to perform UE based TA measurement by an LTM cell switch command, the control node may transmit a notification message related to UE based TA measurement for the at least one candidate cell to the first distributed node, which is the current serving DU. Through this, the control node may control the early TA acquisition procedure for at least one candidate cell among the candidate cells prepared for LTM to be skipped or omitted. In addition, the control node may configure the UE via the LTM cell switch command so that UE based TA measurement for the candidate cell is performed when the at least one candidate cell is triggered for mobility.

According to an embodiment, the control node of the base station may be CU 630 of the embodiment described with reference to FIG. 6a and FIG. 6b. The control node may further perform at least one operation of CU 630 described with reference to FIG. 6a and FIG. 6b.

FIG. 8 illustrates an example of a procedure for receiving TA measurement-related information according to an embodiment of the present disclosure. FIG. 8 illustrates a method performed by a first distributed node of a base station. The base station may include an NG-RAN node. The first distributed node may include a first DU of the NG-RAN node. The first distributed node may be connected to a control node (e.g., CU) of the base station via an F1 interface.

Referring to FIG. 8, in step S801, the first distributed node receives a first message related to UE based TA measurement from the control node. The first distributed node may be the current serving DU of the UE. The first message may indicate at least one candidate cell to which UE based TA measurement is to be applied. For example, the first message may include a notification message indicating that UE based TA measurement for at least one candidate cell may be performed.

In step S803, the first distributed node obtains a TA for at least one other candidate cell based on the first message. The first distributed node may determine, based on the first message, at least one other candidate cell among the candidate cells prepared for LTM for which the early TA acquisition procedure is to be performed. For example, the first distributed node may identify, based on the first message, at least one candidate cell for which the early TA acquisition procedure is to be skipped or omitted, and may control the early TA acquisition procedure to be performed for at least one other candidate cell excluding the identified at least one candidate cell. The first distributed node may obtain TA information for the at least one other candidate cell by controlling the early TA acquisition procedure to be performed for the at least one other candidate cell.

According to an embodiment, the first distributed node of the base station may be S-DU1 620, C-DU1 640-1, or C-DU2 640-2 of the embodiment described with reference to FIG. 6a and FIG. 6b. The first distributed node may further perform at least one operation of S-DU1 620, C-DU1 640-1, or C-DU2 640-2 described with reference to FIG. 6a and FIG. 6b.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method comprising:
determining, by a control node of a base station, to initiate a L1/L2 Triggered Mobility (LTM) configuration for a User Equipment (UE); and
transmitting, by the control node, a first message related to UE-based Timing Advance (TA) measurement to a first distributed node among distributed nodes of the base station,
wherein the first message comprises information indicating at least one candidate cell to which the UE-based TA measurement is to be applied.

2. The method of claim 1, wherein the first distributed node comprises a distributed node managing a current serving cell of the UE.

3. The method of claim 1, further comprising:
receiving a second message comprising TA information of the at least one candidate cell from the first distributed node.

4. The method of claim 3, further comprising:
receiving a second message indicating that a serving cell of the UE has been changed from the first distributed node to a second distributed node based on an LTM cell switch; and
transmitting a third message requesting the TA information of the at least one candidate cell to the first distributed node.

5. The method of claim 3, further comprising:
transmitting a fourth message comprising the TA information of the at least one candidate cell to a second distributed node.

6. The method of claim 5, further comprising:
transmitting a fifth message related to the UE-based TA measurement to the second distributed node,
wherein the fifth message comprises information indicating the at least one candidate cell to which the UE-based TA measurement is to be applied.

7. The method of claim 1, wherein the first message is transmitted based on the UE being configured by a Radio Resource Control (RRC) to perform the UE-based TA measurement for the at least one candidate cell.

8. The method of claim 1, wherein the first message is transmitted based on the UE being configured to perform the UE-based TA measurement by an LTM cell switch command.

9. A method comprising:
receiving, by a first distributed node of a base station, a first message related to User Equipment (UE)-based Timing Advance (TA) measurement from a control node of the base station; and
controlling, by the first distributed node, an early TA acquisition procedure for at least one candidate cell among a plurality of candidate cells for L1/L2 Triggered Mobility (LTM) to be skipped, based on the first message,
wherein the first message comprises information indicating the at least one candidate cell to which the UE-based TA measurement is to be applied.

10. The method of claim 9, wherein the first distributed node controls an early TA acquisition procedure for a candidate cell other than the at least one candidate cell to be performed.

11. The method of claim 9, wherein TA information for the at least one candidate cell is obtained by the UE-based TA measurement.

12. The method of claim 9, further comprising:
receiving, by the first distributed node, valid TA information for some cells among the plurality of candidate cells for the LTM from the control node,
wherein the valid TA information comprises a TA value obtained through an early TA acquisition procedure triggered by a previous serving distributed node of the UE.

13. The method of claim 12, further comprising:
transmitting, by the first distributed node, a notification message for a successful access of the UE to the control node,
wherein the valid TA information is received after the notification message is transmitted.

14. An apparatus comprising:
a transceiver; and
a processor connected to the transceiver,
wherein the processor controls:
a control node of a base station to determine to initiate a L1/L2 Triggered Mobility (LTM) configuration for a User Equipment (UE); and
the control node to transmit a first message related to UE-based Timing Advance (TA) measurement to a first distributed node among distributed nodes of the base station,
wherein the first message comprises information indicating at least one candidate cell to which the UE-based TA measurement is to be applied.

15. An apparatus comprising:
a transceiver; and
a processor connected to the transceiver,
wherein the processor controls:
a first distributed node of a base station to receive a first message related to User Equipment (UE)-based Timing Advance (TA) measurement from a control node of the base station; and
the first distributed node to control an early TA acquisition procedure for at least one candidate cell among a plurality of candidate cells for L1/L2 Triggered Mobility (LTM) to be skipped, based on the first message,
wherein the first message comprises information indicating the at least one candidate cell to which the UE-based TA measurement is to be applied.

16. A communication apparatus comprising:
at least one processor; and
at least one memory connected to the at least one processor and storing instructions that, when executed by the at least one processor, cause a UE to perform operations,
wherein the operations comprise:
determining, by a control node of a base station, to initiate a L1/L2 Triggered Mobility (LTM) configuration for a UE; and
transmitting, by the control node, a first message related to UE-based Timing Advance (TA) measurement to a first distributed node among distributed nodes of the base station,
wherein the first message comprises information indicating at least one candidate cell to which the UE-based TA measurement is to be applied.

17. A non-transitory computer-readable medium storing at least one program instruction,
wherein the at least one program instruction, when executed by at least one processor, causes a UE to perform operations,
wherein the operations comprise:
determining, by a control node of a base station, to initiate a L1/L2 Triggered Mobility (LTM) configuration for a UE; and
transmitting, by the control node, a first message related to UE-based Timing Advance (TA) measurement to a first distributed node among distributed nodes of the base station,
wherein the first message comprises information indicating at least one candidate cell to which the UE-based TA measurement is to be applied.
